# EUROPÄISCHE PATENTSCHRIFT

(11) **EP 3 999 308 B1**
(45) Veröffentlichungstag und Bekanntmachung des Hinweises auf die Patenterteilung: **24.07.2024**
(21) Anmeldenummer: 20730260.5
(22) Anmeldetag: 03.06.2020
(51) Int. Cl.: B29C 48/92, B29C 48/09, G01B 11/06, G01N 21/954, B29C 48/90, B29C 48/49, B29C 48/32, B29C 48/21, G01N 21/85, G01N 21/84, G01N 21/3581

(54) **VERFAHREN UND VORRICHTUNG ZUM VERMESSEN EINES ROHRFÖRMIGEN STRANGS**
METHOD AND DEVICE FOR MEASURING A TUBULAR STRAND
PROCÉDÉ ET DISPOSITIF DE MESURE D'UNE BARRE TUBULAIRE

(30) Priorität: 18.07.2019 DE 102019119491
(43) Veröffentlichungstag der Anmeldung: 25.05.2022
(73) Patentinhaber: SIKORA AG, 28307 Bremen (DE)
(72) Erfinder: HOLLE, Armin, 28832 Achim (DE); FRANK, Christian, 28211 Bremen (DE)
(74) Vertreter: Hauck Patentanwaltspartnerschaft mbB
(86) Internationale Anmeldenummer: PCT/EP2020/065308
(87) Internationale Veröffentlichungsnummer: WO 2021/008770

(56) Entgegenhaltungen:
- EP-A1- 3 480 553
- WO-A1-2015/074642
- WO-A1-2019/086081
- DE-A1- 3 729 743
- DE-B3- 102015 110 600
- DE-U1- 202018 006 144

## Beschreibung

Die Erfindung betrifft ein Verfahren und eine Vorrichtung zum Vermessen eines aus einer Extrusionsvorrichtung austretenden, in Längsrichtung geförderten rohrförmigen Strangs.

In Extrusionsvorrichtungen wird beispielsweise granulatförmig zugeführter Kunststoff aufgeschmolzen und der fließfähige Kunststoff durch einen Ringspalt als rohrförmiger Strang ausgebracht. Anschließend tritt der rohrförmige Strang in eine Kalibriervorrichtung mit einer Kalibrierhülse ein, gegen deren Innenfläche der rohrförmige Strang beispielsweise durch Anlegen eines Unterdrucks (Vakuumtank) gepresst wird. Im weiteren Verlauf durchläuft der rohrförmige Strang eine oder mehrere Kühlstrecken, in der bzw. in denen die Außenfläche des Strangs mit einer Kühlflüssigkeit, wie beispielsweise Kühlwasser, besprüht wird.

Es besteht der Wunsch, bestimmte Geometrieparameter des rohrförmigen Strangs, wie Durchmesser, Wandstärke oder Abweichungen von der vorgegebenen Form, frühzeitig zu ermitteln um auf dieser Grundlage korrigierend in den Extrusionsprozess eingreifen zu können.

Aus WO 2016/139155 A1 sind ein Verfahren und eine Vorrichtung zum Messen des Durchmessers und/oder der Wanddicke eines Strangs mittels Terahertzstrahlung bekannt. Durch einen Strahlungssender wird Terahertzstrahlung auf den zu vermessenden Strang gerichtet und von dem Strang reflektierte Terahertzstrahlung wird von einem Strahlungsempfänger empfangen. Eine Auswerteeinrichtung kann beispielsweise auf Grundlage von Laufzeitmessungen Geometrieparameter wie Durchmesser oder Wanddicke des Strangs ermitteln.

Aus DE 10 2016 109 087 A1 ist ein Verfahren zur Regelung und Steuerung von Rohrextrusionsanlagen bekannt, bei dem zwischen dem Extrusionswerkzeug und der nachfolgenden Kalibriervorrichtung an mehreren Stellen der Durchmesser, die Wandstärke, etwaige Formabweichungen und das Durchhängen des Schmelzeschlauches ermittelt werden und diese Messwerte bzw. daraus berechnete Daten zur Regelung und Steuerung der Extrusionsanlage herangezogen werden. Für die Messung sind in einem Zwischenbereich zwischen Extrusionsanlage und Kalibriervorrichtung mehrere Mess-Sensoren über den Außenumfang des Schmelzeschlauches verteilt angeordnet.

Neben den genannten Messverfahren ist es auch bekannt, Geometrieparameter eines rohrförmigen Strangs mit Ultraschallsensoren zu messen.

Mit dem in DE 10 2016 109 087 A1 beschriebenen Verfahren soll ein schneller Eingriff in die Steuerung der Extrusionsanlage bei Detektieren unerwünschter Geometrieabweichungen möglich sein, indem die Messsensoren den rohrförmigen Strang nach Austritt aus der Extrusionsanlage und vor Eintritt in die Kalibriervorrichtung von der Außenseite vermessen. Nachteilig bei dem bekannten Verfahren ist allerdings, dass der rohrförmige Strang vor Eintritt in die Kalibriervorrichtung noch erheblich von seiner in der Kalibriervorrichtung definierten endgültigen Geometrie abweichen kann. Die mit dem bekannten Verfahren ermittelten Messwerte können daher mit entsprechenden Ungenauigkeiten behaftet sein. Ein Messen mit dem bekannten Messverfahren nach Austritt des rohrförmigen Strangs aus der Kalibriervorrichtung, wenn der rohrförmige Strang also für eine Messung von außen wieder zugänglich ist, stellt zwar sicher, dass die gemessenen Geometriewerte nunmehr näher an der endgültigen Geometrie des Strangs liegen. Allerdings führen auf Grundlage solcher späten Messwerte vorgenommene Regeleingriffe in der Extrusionsanlage zu erheblichem in der Zwischenzeit entstandenen Ausschuss. Ein weiteres Problem des bekannten Messverfahrens liegt in der defokussierenden Wirkung der Strangaußenfläche. Dies kann dazu führen, dass die auf die Strangaußenseite geleitete Strahlung nach Reflexion an dem Strang nur noch mit erheblich verminderter Signalintensität zu dem Strahlungssensor zurück gelangt. Dies stellt insbesondere bei Strängen großer Wandstärke oder mit stark absorbierendem Material ein erhebliches Problem dar, da mit großen Wandstärken bzw. stark absorbierendem Material eine entsprechend große Strahlungsabsorption einhergeht.

Darüber hinaus ist zwischen Ringspalt und Kalibrierhülse das Extrudat typischerweise nicht sauber orthogonal zu einem Sensor ausgerichtet, besonders in der Anfahrphase, wo es vermehrt zu Durchhang kommt. Dies kann zu Signalverlust oder schlechten Messsignalen führen, welche insbesondere einen senkrechten Strahlungseinfall benötigen. Gerade in der Anfangsphase der Strangherstellung ändern sich die Wanddicke und ihre Verteilung noch, was zu weiteren Messunsicherheiten führt. Ein in DE 10 2016 109 087 A1 vorgeschlagenes Errechnen der späteren Form des Strangs aus der Messung setzt darüber hinaus neben einer Kenntnis der Temperatur und exakten Messdaten auch eine genaue Kenntnis des Fließverhaltens voraus. Gerade Letzteres kann sich leicht durch Zusätze oder die Beimengungen von recyceltem Material verändern.

In DE 20 2019 102 002 U1 oder DE 20 2018 006 144 U1 wird das Vermessen eines rohrförmigen Strangs von innen vorgeschlagen, insbesondere innerhalb einer Kalibrierhülse. In der Kalibrierhülse ist der rohrförmige Strang verhältnismäßig rund und durch die Kalibrierhülse auch gleichbleibend ausgerichtet, relativ zur Messvorrichtung. Durch das Messen von innen in der Kalibrierhülse stehen dennoch sehr schnell Messergebnisse für eine Steuerung bzw. Regelung der Extrusionsvorrichtung zur Verfügung, so dass Ausschuss minimiert werden kann. Dabei wird auch gelehrt, wie unter diesen Umständen der Brechungsindex des Strangmaterials ermittelt werden kann.

Die Brechungsindexbestimmung kann in einigen Anwendungsfällen allerdings schwierig sein. Zunächst muss in einer vorgeschalteten Leerfahrt ohne Strang, die Entfernung zwischen der Messvorrichtung und beispielsweise der Kalibrierhülse über den Umfang exakt ermittelt werden. Dies geschieht mithilfe der Messvorrichtung selbst. Diese relative Position darf sich während der Messung bei der nachfolgenden Strangproduktion nicht ändern, um Messfehler zu vermeiden. Es kann in der Praxis allerdings zu einer erheblichen Erwärmung der Kalibrierhülse kommen und damit einer Verschiebung des Mittelpunkts, beispielsweise um den die Messvorrichtung während der Messung rotiert. Außerdem existieren verstellbare Kalibrierhülsen für die Produktion von Strängen unterschiedlicher Durchmesser, ohne dass die Extrusionsvorrichtung neu angefahren werden muss. Auch ein Verstellen des Innendurchmessers der Kalibrierhülse während der Produktion erfolgt teilweise. Diese Dimensionsänderungen erschweren die Brechungsindexbestimmung naturgemäß.

Ein weiteres Problem ist das sogenannte Sagging, also das schwerkraftbedingte Fließen des noch fließfähigen Extrudats nach unten. Das Sagging führt dazu, dass die Wanddickenverteilung des fertigen Strangs bei einer über den Umfang gleichmäßigen, aus der Extrusionsvorrichtung ausgebrachten Wanddicke ungleichmäßig ist. Es wird daher unter Vorhersage des Sagging versucht, die aus der Extrusionsvorrichtung ausgebrachte Wanddickenverteilung gezielt ungleichmäßig zu gestalten, um im fertigen Strang eine möglichst gleichmäßige Wanddickenverteilung zu erreichen. Die Vorhersage des Sagging ist aber schwierig, so dass das beschriebene Vorgehen fehleranfällig ist.

Aus EP 3 480 553 A1 sind ein Terahertz-Messverfahren und eine Terahertz-Messvorrichtung zum Messen mindestens einer Wanddicke eines rohrförmigen Messobjekts bekannt. Dabei wird mit einem Terahertz-Hauptsensor ein Terahertz-Hauptstrahl entlang einer ersten optischen Achse ausgesandt und mit einem Terahertz-Zusatzsensor ein Terahertz-Zusatzstrahl entlang einer zweiten optischen Achse, die gegenüber der ersten optischen Achse um einen Sensorwinkel verstellt ist und zumindest zeitweise nicht durch die Symmetrieachse verläuft, ausgesandt. Der Terahertz-Zusatzstrahl erzeugt einen Reflexionspeak bei einer inneren Wanddickenverformung des Messobjekts, beispielsweise aufgrund von Sagging. Auf diese Weise soll eine Verformung des rohrförmigen Messobjekts detektiert werden.

Aus DE 10 2015 110 600 B3 sind ein Verfahren und eine Vorrichtung zum Ermitteln einer Schichteigenschaft eines in einem Extrusionsprozess erzeugten Extrusionsprodukts durch Bestrahlen mit Terahertzstrahlung und Messen mindestens einer Zuführrate oder Zuführmenge des einem Extruder zugeführten Zuführmaterials bekannt. DE 10 2015 110 600 B3 befasst sich mit dem Problem, dass bei geschäumten Schichten des Extrusionsprodukts der von der Materialdichte abhängende Brechungsindex nicht bekannt ist. Für nicht geschäumte Schichten wird der Brechungsindex dagegen als bekannt angenommen. Um den Brechungsindex von geschäumten Schichten zu ermitteln, schlägt DE 10 2015 110 600 B3 vor, ergänzend zur Vermessung des Extrusionsprodukts mit Terahertzstrahlung Daten oder Messsignale über die dem Extrusionsprozesses zugeführte Materialmenge heranzuziehen, wobei diese gravimetrisch oder volumetrisch gewonnen wird.

Aus WO 2015/074642 A1 sind eine Messvorrichtung und ein Verfahren zur Vermessung von Prüfobjekten bekannt, wobei mindestens eine Sender-/Empfängereinheit vorgesehen ist und mindestens eine Spiegelanordnung mit einem ersten Spiegel, der in einer XY-Ebene einen ersten Brennpunkt und einen zweiten Brennpunkt ausbildet und einen im Bereich des ersten Brennpunkts angeordneten zweiten Spiegel zur Umlenkung von Strahlung.

Aus WO 2019/086081 A1 sind ein Terahertz-Messverfahren und eine Terahertz-Messvorrichtung zur Messung von Rohren bekannt, wobei wie bei der EP 3 480 553 A1 ein Terahertz-Hauptsensor und ein Terahertz-Zusatzsensor vorgesehen sind.

Aus DE 37 297 43 A1 ist ein Verfahren zur kontinuierlichen Ermittlung der Wandstärke von Hohlprofilextrudaten bekannt, bei dem optoelektronisch sowohl auf der Innenseite als auch auf der Außenseite des Hohlprofils von ortsfesten, einander gegenüberliegenden Sensoren eine auf die vorbeilaufende Hohlprofilwandung gerichtete Strahlleistung ausgesandt und die reflektierte Strahlleistung aufgefangen wird, wobei aus der Differenz von ausgesandter und reflektierter Strahlleistung der jeweilige Abstand eines Sensors zur Hohlprofilwandung und damit die Geometrie des Hohlprofils ermittelt wird.

Ausgehend von dem erläuterten Stand der Technik liegt der Erfindung die Aufgabe zugrunde, ein Verfahren und eine Vorrichtung der eingangs genannten Art bereitzustellen, mit denen jederzeit eine zuverlässige und Ausschuss minimierende Strangproduktion ermöglicht wird.

Die Erfindung löst die Aufgabe durch die unabhängigen Ansprüche 1 und 9. Vorteilhafte Ausgestaltungen finden sich in den abhängigen Ansprüchen, der Beschreibung und den Figuren.

Für ein Verfahren der eingangs genannten Art löst die Erfindung die Aufgabe durch die Schritte:
- in einem ersten Messbereich wird Terahertzstrahlung von mindestens einer ersten Strahlungsquelle von innen auf die Innenfläche des rohrförmigen Strangs geleitet, wobei durch den rohrförmigen Strang reflektierte Terahertzstrahlung von mindestens einem ersten Strahlungsempfänger empfangen wird, und wobei aus der empfangenen Terahertzstrahlung mindestens ein geometrischer Parameter des rohrförmigen Strangs in dem ersten Messbereich ermittelt wird,
- in einem zweiten Messbereich, der in Förderrichtung des Strangs stromab des ersten Messbereichs liegt, wird Terahertzstrahlung von mindestens einer zweiten Strahlungsquelle von außen auf die Außenfläche des rohrförmigen Strangs geleitet, wobei durch den rohrförmigen Strang reflektierte Terahertzstrahlung von mindestens einem zweiten Strahlungsempfänger empfangen wird, und wobei aus der empfangenen Terahertzstrahlung mindestens ein geometrischer Parameter des rohrförmigen Strangs in dem zweiten Messbereich ermittelt wird,
- Ermitteln einer Veränderung mindestens eines geometrischen Parameters des rohrförmigen Strangs zwischen dem ersten Messbereich und dem zweiten Messbereich, und
- Ermitteln mindestens einer Einstellanweisung für die Extrusionsvorrichtung auf Grundlage einer ermittelten Veränderung des mindestens einen geometrischen Parameters.

Die Erfindung löst die Aufgabe außerdem durch eine Vorrichtung der eingangs genannten Art, umfassend:
- mindestens eine erste Strahlungsquelle zum Aussenden von Terahertzstrahlung in einem ersten Messbereich von innen auf die Innenfläche des rohrförmigen Strangs, mindestens einen ersten Strahlungsempfänger zum Empfangen der durch den rohrförmigen Strang in dem zweiten Messbereich reflektierten Terahertzstrahlung, und eine erste Auswerteeinrichtung zum Ermitteln mindestens eines geometrischen Parameters des rohrförmigen Strangs in dem ersten Messbereich aus der empfangenen Terahertzstrahlung,
- mindestens eine zweite Strahlungsquelle zum Aussenden von Terahertzstrahlung in einem in Förderrichtung des Strangs stromab des ersten Messbereichs liegenden zweiten Messbereich von außen auf die Außenfläche des rohrförmigen Strangs, mindestens einen zweiten Strahlungsempfänger zum Empfangen der durch den rohrförmigen Strang in dem zweiten Messbereich reflektierten Terahertzstrahlung, und eine zweite Auswerteeinrichtung zum Ermitteln mindestens eines geometrischen Parameters des rohrförmigen Strangs in dem zweiten Messbereich aus der empfangenen Terahertzstrahlung,
- eine dritte Auswerteeinrichtung zum Ermitteln einer Veränderung mindestens eines geometrischen Parameters des rohrförmigen Strangs zwischen dem ersten Messbereich und dem zweiten Messbereich, und zum Ermitteln mindestens einer Einstellanweisung für die Extrusionsvorrichtung auf Grundlage einer ermittelten Veränderung des mindestens einen geometrischen Parameters.

Der erfindungsgemäß vermessene rohrförmige Strang ist ein aus einer Extrusionsvorrichtung austretender, insbesondere hohlzylindrischer Strang, insbesondere ein Kunststoffstrang. Der rohrförmige Strang kann einen Außendurchmesser von mehr als 1 m besitzen. Damit einhergehen entsprechend große Wandstärken. Die Erfindung basiert grundsätzlich auf dem bereits im Stand der Technik beschriebenen Messprinzip, bei dem elektromagnetische Strahlung von einer Strahlungsquelle auf den rohrförmigen Strang gerichtet wird und von diesem reflektierte Strahlung von einem Strahlungsempfänger empfangen wird. Dabei wird Terahertzstrahlung verwendet. Ein Vorteil von Strahlung in diesem Frequenzbereich ist, dass diese, anders als beispielsweise Laserstrahlung im sichtbaren Frequenzbereich, weitgehend unempfindlich gegenüber äußeren Einflüssen ist, wie sie bei Extrusionsprozessen auftreten. Beispielsweise aufgrund von Laufzeitmessungen können damit in an sich bekannter Weise Geometrieparameter wie Durchmesser, Wandstärke und/oder Abweichungen von der vorgegebenen beispielsweise kreiszylindrischen Form ermittelt werden. Zur Ermittlung zum Beispiel der Wandstärke kann elektromagnetische Strahlung in einem Wellenlängenbereich verwendet werden, für den der extrudierte Strang wenigstens teiltransparent ist.

In besonders praxisgemäßer Weise können die mindestens eine erste Strahlungsquelle und der mindestens eine erste Strahlungsempfänger durch mindestens einen ersten Transceiver gebildet sein. Entsprechend können die mindestens eine zweite Strahlungsquelle und der mindestens eine zweite Strahlungsempfänger durch mindestens einen zweiten Transceiver gebildet sein.

Erfindungsgemäß erfolgt eine Vermessung des rohrförmigen Strangs in zwei zueinander beabstandeten Messbereichen. Der erste Messbereich befindet sich nahe des Auslasses der Extrusionsvorrichtung. Der zweite Messbereich befindet sich in Förderrichtung des Strangs stromab des ersten Messbereichs in einem Bereich, in dem die Formgebung des extrudierten Strangs zumindest weitgehend abgeschlossen ist. Im ersten Messbereich erfolgt eine Messung von innen, im zweiten Messbereich von außen. In beiden Messbereichen wird mittels auf den Strang geleiteter Terahertzstrahlung mindestens ein geometrischer Parameter des rohrförmigen Strangs in dem jeweiligen Messbereich ermittelt.

Die im ersten Messbereich erfolgende Messung von innen erlaubt, wie in DE 20 2019 102 002 U1 beschrieben, eine Messung in einem Bereich, in dem die Außenfläche des rohrförmigen Strangs verdeckt ist, beispielsweise durch eine Kalibriervorrichtung, und damit einerseits in unmittelbarer Nähe zur Extrusionsvorrichtung und andererseits bei bereits relativ zuverlässiger Formgebung des Strangs. Außerdem bringt die Messung von innen einige weitere Vorteile mit sich, unter anderem eine fokussierende Wirkung der Krümmung der Stranginnenwand auf die ausgesendete Strahlung und eine Verringerung des erforderlichen Bauraums. Indem im zweiten Messbereich von außen gemessen wird, müssen in diesem Bereich keine Maßnahmen zum Einbringen der Messvorrichtung in den rohrförmigen Strang vorgesehen werden. Gleichzeitig ist der zweite Messbereich so stromab des ersten Messbereichs angeordnet, dass die Außenfläche des rohrförmigen Strangs zugänglich ist und damit für die Messung zur Verfügung steht. Der zweite Messbereich gewährleistet aufgrund seiner Anordnung außerdem eine bereits weiter abgeschlossene Formgebung des Strangs. In beiden Messbereichen können geometrische Parameter, wie beispielsweise Innendurchmesser, Außendurchmesser, Wanddicken und gegebenenfalls Abweichungen von einer vorgegebenen Form auf Grundlage der ausgesandten und von Grenzflächen des rohrförmigen Strangs reflektierten Terahertzstrahlung ermittelt werden, beispielsweise anhand von Laufzeitmessungen, wie dies an sich bekannt ist.

Als Terahertzstrahlung wird vorliegend elektromagnetische Strahlung im Frequenzbereich von 0,001 Terahertz bis 6 Terahertz bezeichnet, vorzugsweise im Frequenzbereich von 0,02 bis 3 Terahertz. Dabei wird vorzugsweise der gleiche geometrische Parameter im ersten und zweiten Messbereich ermittelt. Als geometrischer Parameter kann zum Beispiel der (Innen- und/oder Außen-)Durchmesser und/oder die Wandstärke und/oder Formabweichungen von einer vorgegebenen, zum Beispiel kreiszylindrischen Form, ermittelt werden. Bei der erfindungsgemäßen Vorrichtung sind eine erste, zweite und dritte Auswerteeinrichtung vorgesehen. Sie können separate Auswerteeinrichtungen sein oder auch durch eine gemeinsame Auswerteeinrichtung gebildet sein. Sie können auch mit der Steuer- und/oder Regeleinrichtung kombiniert sein. Die erfindungsgemäße Vorrichtung kann außerdem eine Extrusionsvorrichtung und/oder eine Kalibriervorrichtung, insbesondere eine Kalibrierhülse, und/oder mindestens eine Kühlstrecke umfassen.

Bei der Erfindung werden die Messsignale im ersten und zweiten Messbereich miteinander korreliert. Es wird eine Veränderung mindestens eines geometrischen Parameters des rohrförmigen Strangs zwischen dem ersten Messbereich und dem zweiten Messbereich ermittelt. Hierbei handelt es sich vorzugsweise um den gemessenen geometrischen Parameter selbst. Es kann sich aber auch um einen aus dem gemessenen geometrischen Parameter abgeleiteten geometrischen Parameter handeln. Auf Grundlage einer ermittelten Veränderung des mindestens einen geometrischen Parameters wird weiterhin mindestens eine Einstellanweisung für die Extrusionsvorrichtung ermittelt. Die Einstellanweisung kann zum Beispiel die Ausstoßleistung der Extrusionsvorrichtung oder Form eines Extrusionsspalts betreffen. Die mindestens eine Einstellanweisung wird also auf Grundlage des in dem ersten Messbereich ermittelten mindestens einen geometrischen Parameters des rohrförmigen Strangs und auf Grundlage des in dem zweiten Messbereich ermittelten mindestens einen geometrischen Parameters des rohrförmigen Strangs ermittelt.

Wie bereits erläutert, befindet sich der zweite Messbereich stromab des ersten Messbereichs, insbesondere derart, dass die Formgebung des rohrförmigen Strangs im Wesentlichen abgeschlossen ist. Damit geben die im zweiten Messbereich ermittelten Werte zuverlässig im Wesentlichen die finale Form des rohrförmigen Strangs wieder. Beispielsweise kann durch eine Wanddickenmessung, insbesondere an mehreren über den Umfang des rohrförmigen Strangs verteilten Messorten, ein sogenanntes Sagging sicher erkannt werden. Sagging bezeichnet bekanntlich das schwerkraftbedingte Fließen des noch fließfähigen Extrudats nach unten. Dies führt regelmäßig dazu, dass beispielsweise bei einer über den Umfang vollständig gleichmäßigen, aus der Extrusionsvorrichtung ausgebrachten Wanddicke der fertige rohrförmigen Strang in seinem unteren Bereich eine größere Wanddicke aufweist als in seinem oberen Bereich. Dem wird entgegengewirkt, indem die ausgebrachte Wanddicke der Extrusionsvorrichtung im oberen Bereich etwas größer ist als im unteren Bereich. Wie eingangs erläutert, ist es in der Praxis jedoch schwierig, das Sagging zuverlässig vorauszusagen. Durch die erfindungsgemäße Korrelation der Messsignale aus beiden Messbereichen ist eine Zuordnung von im Wesentlichen direkt hinter der Extrusionsvorrichtung gewonnenen Messdaten im ersten Messbereich zu den Messdaten im weiter stromab befindlichen zweiten Messbereich möglich. Wird beispielsweise im zweiten Messbereich eine über den Umfang gleichmäßige Wanddicke des rohrförmigen Strangs festgestellt, kann dies mit den entsprechenden Messwerten einer dann ungleichmäßigen Wanddickenverteilung im ersten Messbereich in Beziehung gesetzt werden. Nachfolgend kann dann eine schnelle Regelung der Extrusionsvorrichtung auf Grundlage der als vorteilhaft erkannten Messwerte des ersten Messbereichs erfolgen. Durch die Korrelation der Messergebnisse kann somit unter Berücksichtigung der Messergebnisse im zweiten Messbereich, insbesondere der Veränderung der Messergebnisse zwischen dem ersten und zweiten Messbereich, und weiterhin auf Grundlage der Messergebnisse im ersten Messbereich, und damit sehr schnell unter Minimierung von Ausschuss die entsprechende Einstellanweisung ermittelt werden.

Es ist auch möglich, die ermittelte Veränderung des mindestens einen geometrischen Parameters für einen dem aktuellen Produktionsprozess nachfolgenden Produktionsprozess zu nutzen, in dem dann die Ermittlung der Einstellanweisung erfolgt, beispielsweise wenn die Produktionsparameter des nachfolgenden Produktionsprozesses im Übrigen unverändert sind.

Gemäß einer Ausgestaltung kann die Extrusionsvorrichtung auf Grundlage der mindestens einen ermittelten Einstellanweisung gesteuert und/oder geregelt werden. Die erfindungsgemäße Vorrichtung weist hierzu eine Steuer- und/oder Regeleinrichtung auf. Insbesondere ist eine automatische Steuerung bzw. Regelung möglich und damit ein hochautomatisierter Betrieb unter Fehlerminimierung.

Gemäß einer weiteren Ausgestaltung kann sich der rohrförmige Strang im ersten Messbereich in einer der Extrusionsvorrichtung nachfolgenden Kalibriervorrichtung, insbesondere einer Kalibrierhülse, befinden. Solche Kalibriervorrichtungen weisen häufig hohlzylindrische Kalibrierhülsen auf, gegen die der extrudierte Strang im noch weichen Zustand beispielsweise durch Anlegen eines Unterdrucks (Vakuumtank) angedrückt wird. Hierdurch wird einerseits ein Kollabieren des noch fließfähigen Strangs verhindert. Andererseits wird durch die Kalibrierhülse der gewünschte Außendurchmesser des Strangs und seine Außenform definiert vorgegeben. Die Kalibriervorrichtung, insbesondere die Kalibrierhülse, kann sich dabei unmittelbar an einen Extruderkopf der Extrusionsvorrichtung anschließen. Es ist also insbesondere möglich, dass zwischen dem Extruderkopf und der Kalibriervorrichtung im Wesentlichen kein Abstand besteht. Indem die Messung in der Kalibriervorrichtung, insbesondere ausgehend von deren Zentrum, erfolgt, wenn der extrudierte Strang die Kalibriervorrichtung durchläuft, erfolgt einerseits eine Geometriebestimmung im Wesentlichen unmittelbar nach der Extrusion und somit zu einem für die Steuerung bzw. Regelung günstigen frühen Zeitpunkt. Andererseits weist der rohrförmige Strang in der Kalibriervorrichtung bereits eine nahe an seiner endgültigen Form liegende äußere Geometrie auf.

Gemäß einer weiteren Ausgestaltung kann sich der zweite Messbereich stromab einer von dem rohrförmigen Strang durchlaufenen Kühlstrecke befinden. In solchen Kühlstrecken erfolgt eine geführte Abkühlung des rohrförmigen Strangs zur Erlangung der endgültigen Form. In der Kühlstrecke kann beispielsweise von außen Kühlflüssigkeit, wie Wasser, auf den Strang aufgebracht werden. Nach Durchlaufen der Kühlstrecke ist die Formgebung bzw. ein Sagging weitgehend abgeschlossen. Die in dem zweiten Messbereich gelieferten Messwerte geben damit eine besonders zuverlässige Aussage hinsichtlich der Geometrie des rohrförmigen Strangs. Die Produktionsanlage für solche rohrförmigen Stränge kann mehrere Kühlstrecken umfassen, beispielsweise drei Kühlstrecken. Der zweite Messbereich kann sich zum Beispiel zwischen der ersten und zweiten Kühlstrecke befinden.

Um wellenlängenabhängige Einflüsse auf die Messung zu minimieren bzw. auszuschließen, kann nach einer weiteren Ausgestaltung vorgesehen sein, dass sich die Wellenlänge der von der mindestens einen ersten Strahlungsquelle und der von der mindestens einen zweiten Strahlungsquelle ausgesandten Terahertzstrahlung höchstens um den Faktor 5, vorzugsweise höchstens um den Faktor 3, weiter vorzugsweise höchstens um den Faktor 1,5, noch weiter vorzugsweise nicht unterscheidet.

Nach einer weiteren Ausgestaltung kann vorgesehen sein, dass die Terahertzstrahlung durch die mindestens eine erste Strahlungsquelle auf mehrere über den Innenumfang des rohrförmigen Strangs verteilte Messorte auf der Innenfläche des rohrförmigen Strangs geleitet wird und/oder dass die Terahertzstrahlung durch die mindestens eine zweite Strahlungsquelle auf mehrere über den Außenumfang des rohrförmigen Strangs verteilte Messorte auf der Außenfläche des rohrförmigen Strangs geleitet wird.

Es ist dabei insbesondere möglich, dass durch die erste und/oder zweite Strahlungsquelle ausgesandte Terahertzstrahlung über einen Messbereich von 360° auf die Innenfläche bzw. die Außenfläche des rohrförmigen Strangs geleitet wird. Damit ist eine vollständige Erfassung zum Beispiel der Wanddickenverteilung über den Umfang des Strangs möglich. Es ist auch möglich, dass die Terahertzstrahlung der mindestens einen ersten Strahlungsquelle mit mindestens einem im Inneren des rohrförmigen Strangs angeordneten, um die Längsachse des rohrförmigen Strangs rotierenden ersten Strahlungssender auf die Innenfläche des rohrförmigen Strangs geleitet wird und/oder dass die Terahertzstrahlung der mindestens einen zweiten Strahlungsquelle mit mindestens einem außerhalb des rohrförmigen Strangs angeordneten, um die Längsachse des rohrförmigen Strangs rotierenden zweiten Strahlungssender auf die Außenfläche des rohrförmigen Strangs geleitet wird. Weiter ist es möglich, dass der mindestens eine erste Strahlungssender die mindestens eine erste Strahlungsquelle ist und/oder dass der mindestens eine zweite Strahlungssender die mindestens eine zweite Strahlungsquelle ist. Es ist aber auch denkbar, dass der Strahlungssender nicht die Strahlungsquelle ist, sondern beispielsweise ein die Terahertzstrahlung jeweils reflektierender Spiegel. Beispielsweise ist es möglich, dass der mindestens eine erste und/oder zweite Strahlungssender mindestens ein durch die mindestens eine erste bzw. zweite Strahlungsquelle bestrahlter, um die Längsachse des rohrförmigen Strangs rotierender Spiegel ist. Natürlich ist es auch denkbar, dass mehrere erste Strahlungsquellen und gegebenenfalls mehrere erste Strahlungsempfänger vorgesehen sind, durch die Terahertzstrahlung auf mehrere über den Innenumfang des rohrförmigen Strangs verteilte Messorte auf der Innenfläche des rohrförmigen Strangs geleitet wird und/oder dass mehrere zweite Strahlungsquellen und gegebenenfalls auch mehrere zweite Strahlungsempfänger vorgesehen sind, durch die die Terahertzstrahlung auf mehrere über den Außenumfang des rohrförmigen Strangs verteilte Messorte auf der Außenfläche des rohrförmigen Strangs geleitet wird.

Nach einer weiteren Ausgestaltung kann als mindestens ein geometrischer Parameter die Wanddicke des rohrförmigen Strangs an mehreren über den Umfang des rohrförmigen Strangs verteilten Messorten in dem ersten Messbereich und an mehreren über den Umfang des rohrförmigen Strangs verteilten Messorten in dem zweiten Messbereich gemessen werden. Die Messorte in dem ersten Messbereich und die Messorte in dem zweiten Messbereich können dabei insbesondere gleichen Wandbereichen des rohrförmigen Strangs entsprechen, insbesondere gleichen Umfangsbereichen. Auch eine zeitliche Korrelation der Messungen derart ist möglich, dass auch in Längsrichtung die gleichen Wandbereiche vermessen werden. Auf diese Weise ist eine optimale Vergleichbarkeit der Messwerte gegeben. Das Erfassen der Wanddicke an mehreren Umfangsorten liefert eine Aussage über die Wanddickenverteilung, und damit über ein eventuelles Sagging. Auf diese Weise kann zum Beispiel kontrolliert werden, ob die Wanddicke im zweiten Messbereich, also nach weitgehendem Abschluss der Formgebung, über den Umfang des Strangs gleichförmig ist.

Nach einer weiteren Ausgestaltung kann vorgesehen sein, dass in einem ersten Steuer- und/oder Regelvorgang eine Steuerung und/oder Regelung der Extrusionsvorrichtung auf Grundlage der Messung in dem zweiten Messbereich derart erfolgt, dass die Messwerte in dem zweiten Messbereich vorgegebenen Sollmesswerten entsprechen, dass bei Erreichen der Sollmesswerte in dem zweiten Messbereich die zugeordneten Messwerte in dem ersten Messbereich ermittelt werden, und dass in einem nachfolgenden Steuer- und/oder Regelvorgang eine Steuerung und/oder Regelung der Extrusionsvorrichtung auf Grundlage der Messung in dem ersten Messbereich derart erfolgt, dass die Messwerte in dem ersten Messbereich den ermittelten zugeordnete Messwerten entsprechen.

Bei dieser Ausgestaltung erfolgt zunächst in einem ersten Steuer- und/oder Regelvorgang eine Steuerung und/oder Regelung der Extrusionsvorrichtung auf Grundlage einer Messung in dem zweiten Messbereich, so dass der rohrförmige Strang im zweiten Messbereich nach zumindest weitgehendem Abschluss der Formgebung die vorgegebene Form, beispielsweise Wanddickenverteilung, besitzt. Sobald dies erreicht ist, werden die zugehörigen Messwerte beispielsweise der Wanddickenverteilung im ersten Messbereich ermittelt. Insbesondere bei Auftreten eines Saggings und bei gewünschter gleichförmiger Wanddickenverteilung im zweiten Messbereich wird die Wanddickenverteilung im ersten Messbereich entsprechend ungleichförmig sein, wie oben erläutert. Auf diese ungleichförmige Wanddickenverteilung kann anschließend auf Grundlage der Messung dann (nur noch) im ersten Messbereich gesteuert bzw. geregelt werden, nämlich in dem zweiten Steuer- und/oder Regelvorgang. Dieses Vorgehen hat den Vorteil, dass nach Abschluss des ersten Steuer- und/oder Regelvorgangs eine Steuerung bzw. Regelung aufgrund der Messwerte im ersten Messbereich, und damit insbesondere im Wesentlichen direkt nach Austritt des Strangs aus der Extrusionsvorrichtung erfolgt. Es erfolgt somit eine besonders schnelle Steuerung bzw. Regelung unter Minimierung von Ausschuss.

Erfindungsgemäß wird weiterhin aus der durch den mindestens einen zweiten Strahlungsempfänger in dem zweiten Messbereich empfangenen Terahertzstrahlung der Brechungsindex des rohrförmigen Strangs bestimmt. Die Brechungsindexbestimmung kann zum Beispiel erfolgen wie in der WO 2016/139155 A1 beschrieben. Insbesondere ist es für die Brechungsindexbestimmung vorteilhaft, wenn gemäß einer weiteren Ausgestaltung auf einer der mindestens einen zweiten Strahlungsquelle und/oder dem mindestens einen zweiten Strahlungsempfänger gegenüberliegenden Seite des rohrförmigen Strangs mindestens ein Strahlungsreflektor vorgesehen ist, der von der mindestens einen zweiten Strahlungsquelle ausgesandte Terahertzstrahlung zu dem mindestens einen zweiten Strahlungsempfänger reflektiert. Auf diese Weise ist die Brechungsindexbestimmung auf Grundlage einer Laufzeitmessung der Terahertzstrahlung zwischen dem Strahlungssender bzw. Strahlungsempfänger, vorzugsweise einem Transceiver, und dem Reflektor möglich, insbesondere indem bei bekannter Wandstärke die Laufzeit der Terahertzstrahlung ohne im Messbereich befindlichen Strang mit der Laufzeit mit im Messbereich befindlichen Strang verglichen wird, wie dies in der WO 2016/139155 A1 erläutert ist. Dafür ist grundsätzlich nur die Bestrahlung einer Wand des Strangs erforderlich. Es muss lediglich die Position des feststehenden Reflektors und der Strahlungsquelle bekannt sein. Es könnten auch zwei feststehende gegenüberliegende Reflektoren vorgesehen sein, deren Abstand zueinander bekannt ist. Auch ist es möglich, den Brechungsindex des Materials an verschiedenen Stellen über den Umfang zu bestimmen. Mit einer entsprechenden Kalibrierung kann hieraus auf die mittlere Temperatur des Strangmaterials an dem Messort geschlossen werden. Während beispielsweise ein PIR-Sensor die Oberflächentemperatur des Strangs misst, könnte auf diese Weise die Temperatur in der Strangwand ermittelt werden. Natürlich kann auch auf Grundlage der Messung im ersten Bereich gegebenenfalls zusätzlich der Brechungsindex bestimmt werden. Hierzu kann zum Beispiel in besonders einfacher Weise eine metallische Kalibrierhülse als Reflektor dienen.

Der in dem zweiten Messbereich bestimmte Brechungsindex wird erfindungsgemäß zur Ermittlung des mindestens einen geometrischen Parameters in dem ersten Messbereich verwendet. Wie eingangs erläutert, ist eine Brechungsindexbestimmung im zweiten Messbereich, wenn die Formgebung des rohrförmigen Strangs weitgehend abgeschlossen ist, zuverlässiger und sicherer als im ersten Messbereich, in dem das Strangmaterial noch relativ fließfähig ist. Bei der vorgenannten Ausgestaltung wird dieser besonders zuverlässig bestimmte Brechungsindex dann für die Ermittlung des geometrischen Parameters im ersten Messbereich genutzt, beispielsweise zur Ermittlung der geometrischen Wanddicke. Hierbei wird davon ausgegangen, dass sich der Brechungsindex zwischen dem ersten und zweiten Messbereich nicht verändert. Bekanntlich hängt der Brechungsindex nur geringfügig von der Temperatur ab. Es ist dann weiter möglich, bei bekannter Temperaturveränderung des Strangs zwischen dem ersten und zweiten Messbereich diese Temperaturabhängigkeit bei der Nutzung des im zweiten Messbereich bestimmten Brechungsindex im ersten Messbereich zu berücksichtigen. Die Temperatur des Strangs kann zum Beispiel durch hierfür vorgesehene Temperatursensoren gemessen werden. Grundsätzlich könnte aber auch eine Ermittlung der Veränderung und der Einstellanweisung ohne Berücksichtigung des Brechungsindex erfolgen, indem beispielsweise nur die optischen Wanddicken im ersten und zweiten Messbereich, und damit eine relative Veränderung der Wanddicken, berücksichtigt wird.

Wie grundsätzlich bereits erläutert, ergibt sich eine besonders zuverlässige Messung und einfache Auswertung, wenn gemäß einer weiteren Ausgestaltung vorgesehen ist, dass die Terahertzstrahlung durch die mindestens eine erste Strahlungsquelle senkrecht zur Längsachse des rohrförmigen Strangs auf die Innenfläche des rohrförmigen Strangs geleitet wird und/oder dass die Terahertzstrahlung durch die mindestens eine zweite Strahlungsquelle senkrecht zur Längsachse des rohrförmigen Strangs auf die Außenfläche des rohrförmigen Strangs geleitet wird.

Die mindestens eine erste Strahlungsquelle und/oder der mindestens eine erste Strahlungsempfänger können im Inneren des rohrförmigen Strangs angeordnet sein. Eine Versorgung der mindestens einen ersten Strahlungsquelle und/oder des mindestens einen ersten Strahlungsempfängers mit elektrischer Energie, Daten und/oder mit einem Kühlmittel kann dann zum Beispiel durch mindestens einer aus einem Extruderkopf der Extrusionsvorrichtung zu der mindestens einen ersten Strahlungsquelle und/oder dem mindestens einen ersten Strahlungsempfänger geführten Versorgungsleitungen erfolgen. Es ist aber auch möglich, dass die mindestens eine erste Strahlungsquelle und/oder der mindestens eine erste Strahlungsempfänger außerhalb des rohrförmigen Strangs angeordnet ist, und dass von der mindestens einen ersten Strahlungsquelle ausgesandte Terahertzstrahlung über mindestens einen Strahlungsleiter in das Innere des rohrförmigen Strangs geleitet wird, und dass die von dem rohrförmigen Strang reflektierte Terahertzstrahlung über mindestens einen Strahlungsleiter aus dem Inneren des rohrförmigen Strangs zu dem mindestens einen ersten Strahlungsempfänger geleitet wird. Der mindestens eine Strahlungsleiter kann dann beispielsweise aus einem Extruderkopf der Extrusionsvorrichtung in das Innere des rohrförmigen Strangs geführt sein.

Das erfindungsgemäße Verfahren kann mit der erfindungsgemäßen Vorrichtung durchgeführt werden. Entsprechend kann die erfindungsgemäße Vorrichtung zur Durchführung des erfindungsgemäßen Verfahrens ausgebildet sein.

Ausführungsbeispiele der Erfindung werden nachfolgend anhand von Figuren näher erläutert. Es zeigen schematisch:
- Figur 1: eine erfindungsgemäße Vorrichtung in einer Schnittansicht,
- Figur 2: eine Detailansicht der in Figur 1 gezeigten Vorrichtung nach einem ersten Ausführungsbeispiel,
- Figur 3: eine Detailansicht der in Figur 1 gezeigten Vorrichtung nach einem zweiten Ausführungsbeispiel,
- Figur 4: eine Querschnittsansicht entlang der Linie A-A in Figur 3, und
- Figur 5: eine Detailansicht der in Figur 1 gezeigten Vorrichtung nach einem dritten Ausführungsbeispiel.

Soweit nicht anders angegeben ist, bezeichnen in den Figuren gleiche Bezugszeichen gleiche Gegenstände.

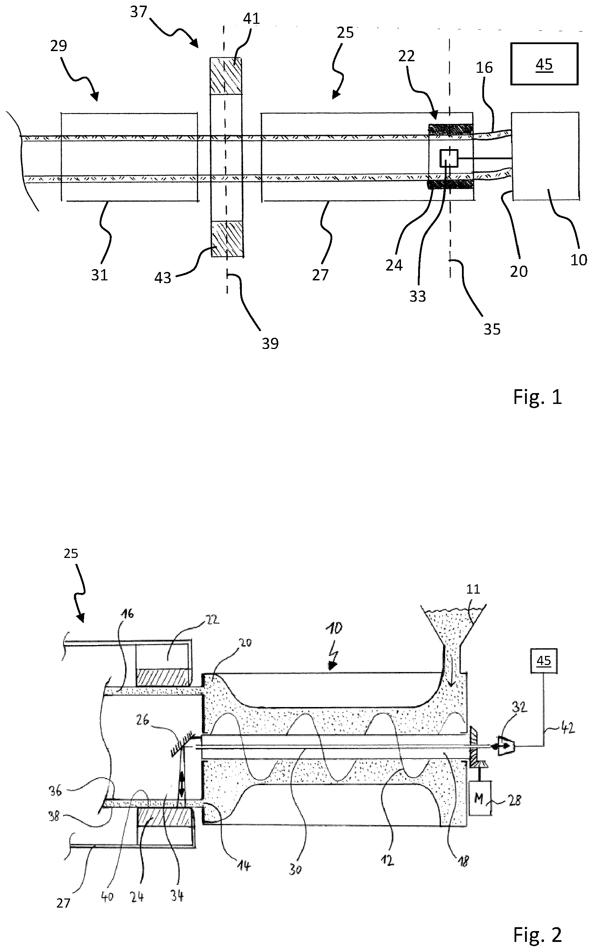

In Figur 1 ist eine Extrusionsvorrichtung 10 zum Extrudieren eines rohrförmigen Strangs 16 gezeigt. Die Extrusionsvorrichtung 10 besitzt in an sich bekannter Weise eine beispielsweise in Figur 2 gezeigte Zuführung 11 zum Zuführen des zu verarbeitenden Kunststoffmaterials. Über eine Extruderschnecke 12 wird das plastifizierte Kunststoffmaterial aus einem Ringspalt 14 zu einem rohrförmigen Strang 16 extrudiert. Innerhalb der Extruderschnecke 12 verläuft ein drehend angetriebener zentraler Schaft 18. Dicht benachbart zu dem Extruderkopf 20 schließt sich in dem gezeigten Beispiel eine Kalibriervorrichtung 22 an mit einer metallischen Kalibrierhülse 24, gegen die der extrudierte Strang 16 mittels Unterdrucks gepresst wird. Bei dem Bezugszeichen 25 ist außerdem eine erste Kühlstrecke 25 mit einem ersten Kühlrohr 27 gezeigt, in dem eine geführte Abkühlung des rohrförmigen Strangs 16 erfolgt derart, dass der Strang 16 nach Austritt aus der ersten Kühlstrecke 25 seine Formgebung im Wesentlichen abgeschlossen hat. Der ersten Kühlstrecke 25 nachgeordnet ist eine zweite Kühlstrecke 29 mit einem zweiten Kühlrohr 31, das eine weitere Abkühlung des Strangs 16 bewirkt. In der Kalibrierhülse 24 und im Inneren des extrudierten Strangs 16 befindet sich in dem gezeigten Beispiel eine erste Messvorrichtung 33, die einen in Figur 1 durch eine gestrichelt gezeigte Ebene definierten ersten Messbereich 35 bildet. Beispielsweise aufgrund von Laufzeitmessungen können durch die erste Messvorrichtung 33 geometrische Parameter des Strangs 16 in dem ersten Messbereich 35 ermittelt werden, wie zum Beispiel Außendurchmesser, Innendurchmesser und/oder Wanddicke bzw. Formabweichungen von einer vorgegebenen Form. Verschiedene Ausführungsbeispiele der ersten Messvorrichtung 33 werden nachfolgend anhand der Figuren 2 bis 5 erläutert. Außerdem befindet sich zwischen der ersten Kühlstrecke 25 und der zweiten Kühlstrecke 29 eine zweite Messvorrichtung 37, die einen in Figur 1 durch eine gestrichelt gezeigte Ebene definierten zweiten Messbereich 39 bildet. Die zweite Messvorrichtung 37 umfasst in dem dargestellten Beispiel mehrere über den Umfang des Strangs 16 verteilt angeordnete Transceiver 41, 43 zum Senden und Empfangen von auf die Außenfläche des Strangs 16 geleiteter Terahertzstrahlung. Beispielsweise aufgrund von Laufzeitmessungen können durch die zweite Messvorrichtung 37 so geometrische Parameter des Strangs 16 in dem zweiten Messbereich 39 ermittelt werden, wie zum Beispiel Außendurchmesser, Innendurchmesser und/oder Wanddicke bzw. Formabweichungen von einer vorgegebenen Form. Die Transceiver 41, 43 können dabei die geometrischen Parameter an unterschiedlichen Orten über den Umfang des Strangs 16 verteilt messen. Beispielsweise können die Transceiver 41, 43 um den Strang 16 rotieren und so die geometrischen Parameter in einem Umfangsbereich von bis zu 360° ermitteln. Auch kann auf Grundlage der Messung im zweiten Messbereich 39 der Brechungsindex des Strangmaterials bestimmt werden. Hierzu können beispielsweise im Bereich der Außenseite der zweiten Messvorrichtung 37 geeignete Reflektoren für die Terahertzstrahlung vorgesehen sein.

Die erfindungsgemäße Vorrichtung umfasst darüber hinaus eine kombinierte Auswerte- und Regeleinrichtung 45, die einerseits aus den Messwerten der Messvorrichtungen 33, 37 die entsprechenden geometrischen Parameter und gegebenenfalls den Brechungsindex ermittelt, und die andererseits eine Veränderung der gemessenen geometrischen Parameter zwischen dem ersten Messbereich 35 und dem zweiten Messbereich 39 ermittelt. Die kombinierte Auswerte- und Regeleinrichtung 45 ermittelt darüber hinaus mindestens eine Einstellanweisung für die Extrusionsvorrichtung 10 auf Grundlage der ermittelten Veränderung der geometrischen Parameter und regelt die Extrusionsvorrichtung 10 auf dieser Grundlage. Die Auswerte- und Regeleinrichtung 45 umfasst also die erfindungsgemäßen ersten, zweiten und dritten Auswerteeinrichtungen sowie die Steuer- und/oder Regeleinrichtung. Beispielsweise kann in einem ersten Regelvorgang eine Regelung der Extrusionsvorrichtung 10 auf Grundlage der Messung in dem zweiten Messbereich 39 derart erfolgen, dass die Messwerte in dem zweiten Messbereich 39 vorgegebenen Soll-Messwerten entsprechen. Bei Erreichen der Soll-Messwerte in dem zweiten Messbereich 39 werden die zugeordneten Messwerte in dem ersten Messbereich 35 ermittelt. In einem nachfolgenden Regelvorgang erfolgt dann eine Regelung der Extrusionsvorrichtung 10 auf Grundlage der Messungen in dem ersten Messbereich 35 derart, dass die Messwerte in dem ersten Messbereich 35 (weiterhin) den ermittelten zugeordneten Messwerten entsprechen. Außerdem kann zur Bestimmung von geometrischen Parametern durch die erste Messvorrichtung 33 im ersten Messbereich 35 der durch die zweite Messvorrichtung 37 im zweiten Messbereich 39 ermittelte Brechungsindex verwendet werden. Durch die vorgenannte Regelung kann zum Beispiel ein Sagging des noch fließfähigen Strangmaterials so ausgeglichen werden, dass der Strang 16 nach Abschluss seiner Formgebung, insbesondere im Bereich des zweiten Messbereichs 39, eine vorgegebene möglichst gleichmäßige Wanddickenverteilung aufweist.

Nachfolgend werden unterschiedliche Ausführungsbeispiele für die Messung von innen im ersten Messbereich 35 erläutert.

Bei dem in Figur 2 gezeigten Beispiel ist im Inneren des extrudierten Strangs 16 und im Wesentlichen unmittelbar im Anschluss an den Extruderkopf 20 und somit in der Kalibriervorrichtung 22 ein Spiegel 26 angeordnet. Der Spiegel 26 ist mit dem Schaft 18 verbunden, der wiederum über einen Motor 28 drehend angetrieben wird.

Dadurch wird auch der Spiegel 26 um die Längsachse des rohrförmigen Strangs 16 rotiert. In dem Schaft 18 verläuft außerdem ein Hohlleiter 30, der von einem Transceiver 32, der in dem gezeigten Beispiel eine Strahlungsquelle und einen Strahlungsempfänger umfasst, ausgesandte Terahertzstrahlung zu dem Spiegel 26 leitet, der diese Strahlung um 90° auf die Innenfläche des Strangs 16 ablenkt, wie in Figur 2 durch das Bezugszeichen 34 veranschaulicht. Die Terahertzstrahlung wird einerseits von der Innenfläche 36 des extrudierten Strangs 16 zurück zu dem Spiegel 26 reflektiert und von diesem über den Hohlleiter 30 zurück zu dem Transceiver 32 geleitet. Ein weiterer Strahlungsanteil tritt in den extrudierten Strang 16 ein und wird an der Grenzfläche zwischen Außenfläche 38 des Strangs 16 und Innenfläche 40 der Kalibrierhülse 24 reflektiert und wieder von dem Spiegel 26 und dem Hohlleiter 30 zu dem Transceiver 32 geleitet.

Die von dem Transceiver 32 empfangenen Messwerte werden über eine Leitung 42 zu der Auswerte- und Regeleinrichtung 45 übertragen. Die Auswerte- und Regeleinrichtung 45 ermittelt beispielsweise aufgrund von Laufzeitmessungen aus den Messwerten den Innen- und/oder Außendurchmesser und/oder die Wandstärke und/oder etwaige Formabweichungen des extrudierten Strangs 16. Außerdem kann in der oben erläuterten Weise anhand der an der Grenzfläche zur metallischen Kalibrierhülse 24 zurückreflektierten Strahlung auch der Brechungsindex des Strangmaterials bestimmt werden. Aufgrund der Rotation des Spiegels 26 kann die erläuterte Messung für eine Vielzahl von Messbereichen über den Umfang des rohrförmigen Strangs 16 verteilt erfolgen, beispielsweise wieder über einen Bereich von 360°. Auf Grundlage der ermittelten Messwerte kann die Auswerte- und Regeleinrichtung 45 die Extrusionsvorrichtung regeln.

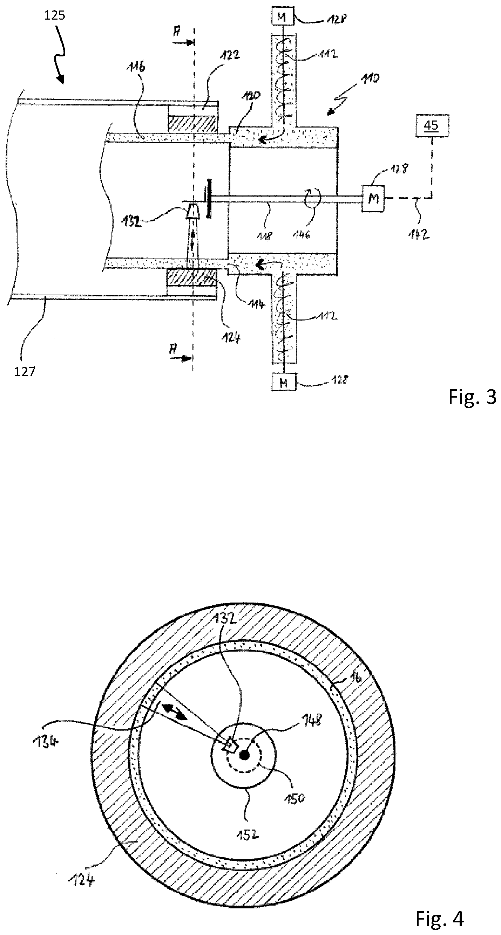

In Figur 3 ist ein weiteres Ausführungsbeispiel gezeigt, das weitgehend dem Ausführungsbeispiel nach Figur 2 entspricht. Im Unterschied zu dem Ausführungsbeispiel der Figur 2 ist in Figur 3 eine Extrusionsvorrichtung 110 gezeigt, die zwei senkrecht zur Längsachse des Ringspalts 114 verlaufende Extruderschnecken 112 besitzt. Die Extruderschnecken 112 werden jeweils über einen Motor 128 drehend angetrieben. Das zugeführte Material wird wieder über den Ringspalt 114 zur Bildung des rohrförmigen Strangs 116 ausgebracht. Unmittelbar im Anschluss an die Extrusionsvorrichtung 110 ist wiederum eine Kalibriervorrichtung 122 mit einer metallischen Kalibrierhülse 124 vorgesehen. Weiterhin ist ein erstes Kühlrohr 127 einer ersten Kühlstrecke 125 gezeigt. Der in Figur 3 extrudierte rohrförmige Strang 116 kann einen größeren Durchmesser besitzen als der in Figur 2 gezeigte rohrförmige Strang 16. Entsprechend besteht bei dem Ausführungsbeispiel der Figur 3 mehr Platz im Innenraum des Strangs 116. Daher ist bei diesem Ausführungsbeispiel ein Transceiver 132 im Stranginneren angeordnet. Der Transceiver 132 wird über einen durch den Extruderkopf 120 geführten Schaft 118 mittels eines weiteren Motors 128 drehend angetrieben, wie in Figur 3 durch den Pfeil 146 angedeutet. Der Transceiver 132 kann zum Beispiel über Schleifringkontakte mit einer nicht näher dargestellten externen elektrischen Versorgung verbunden sein. Über diese Schleifringkontakte kann gegebenenfalls auch eine Übertragung der Messwerte des Transceivers 132 an die Auswerteeinrichtung 45 erfolgen, wie durch die gestrichelt dargestellte Leitung 142 veranschaulicht.

Der rotierende Transceiver 132 nimmt in grundsätzlich gleicher Weise wie zu Figur 2 beschrieben Messwerte auf, so dass die Auswerte- und Regeleinrichtung 45 auf dieser Grundlage insbesondere den Innen- und/oder Außendurchmesser, die Wandstärke und etwaige Formabweichungen des rohrförmigen Strangs 116 bestimmen kann. Wiederum kann auf dieser Grundlage eine Regelung der Extrusionsvorrichtung 110 erfolgen. Denkbar wäre grundsätzlich auch, den Rotationsantrieb ebenfalls im Inneren des rohrförmigen Strangs 116 anzuordnen. In Figur 4 ist die von dem Transceiver 132 ausgesandte und zurück reflektierte Strahlung bei dem Bezugszeichen 134 veranschaulicht. Außerdem sind in Figur 4 der Rotationsmittelpunkt 148 und die Kreisbahn 150 des Transceivers gezeigt. Bei dem Bezugszeichen 152 ist ein Gehäuse des Messkopfes mit dem Transceiver 132 veranschaulicht.

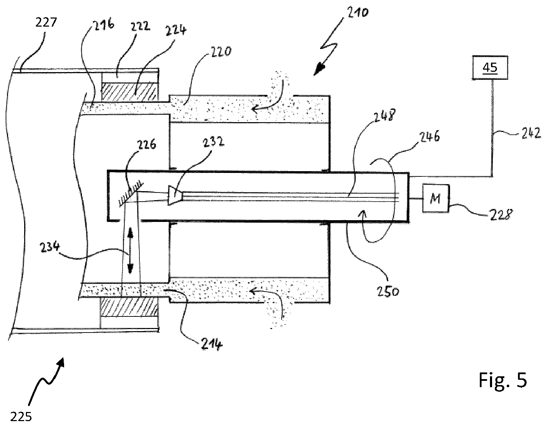

In Figur 5 ist ein weiteres Ausführungsbeispiel dargestellt, das wiederum weitgehend den oben erläuterten Ausführungsbeispielen entspricht. Die in Figur 5 gezeigte Extrusionsvorrichtung 210 bringt wiederum über einen Ringspalt 214 über nicht näher dargestellte Extruderschnecken zugeführtes plastifiziertes Kunststoffmaterial zu einem rohrförmigen Strang 216 aus. Wiederum schließt sich im Wesentlichen unmittelbar an den Extruderkopf 220 eine Kalibriervorrichtung 222 mit einer metallischen Kalibrierhülse 224 an, gegen die der Strang 216 beispielsweise mittels Unterdruck gedrückt wird. Bei dem Bezugszeichen 227 ist ein Kühlrohr einer Kühlstrecke 225 gezeigt. In dem gezeigten Beispiel befindet sich im Stranginneren wiederum ein Spiegel 226 innerhalb der Kalibriervorrichtung 222, der von einem im Extruderkopf 220 angeordneten Transceiver 232 ausgesandte Terahertzstrahlung um 90° auf die Innenfläche des Strangs 216 ablenkt, wie bei 234 veranschaulicht. Über einen in Figur 5 bei dem Bezugszeichen 228 dargestellten Motor wird der Transceiver 232 gemeinsam mit dem Spiegel 226 um die Längsachse des rohrförmigen Strangs 216 rotiert, wie durch den Pfeil 246 veranschaulicht. Eine Versorgungsleitung 248 dient zur elektrischen Versorgung des Transceivers und zur Versorgung mit einem Kühlmittel, wie einer Kühlflüssigkeit.

Außerdem können von dem Transceiver 232 aufgenommene Messwerte über die Versorgungsleitung 248 über eine Leitung 242 der Auswerte- und Regeleinrichtung 45 zugeleitet werden. Die Aufnahme der Messwerte, die Auswertung durch die Auswerte- und Regeleinrichtung 45 und die darauf basierende Regelung der Extrusionsvorrichtung 210 entspricht bei dem in Figur 5 gezeigten Ausführungsbeispiel den oben erläuterten Ausführungsbeispielen. Bei dem Ausführungsbeispiel nach Figur 5 befinden sich der Spiegel 226 und der Transceiver 232 innerhalb eines Gehäuses 250, das zur Messung als Einschub in den Extruderkopf 220 eingesetzt werden kann. Durch Entnahme des Gehäuses 250 kann die Messvorrichtung sofern gewünscht in einfacher Weise entfernt werden.

### Bezugszeichen

- 10, 110, 210: Extrusionsvorrichtung
- 11: Zuführung
- 12, 112: Extruderschnecke
- 14, 114, 214: Ringspalt
- 16, 116, 216: rohrförmiger Strang
- 18, 118: Schaft
- 20, 120, 220: Extruderkopf
- 22, 122, 222: Kalibriervorrichtung
- 24, 124, 224: Kalibrierhülse
- 25, 125, 225: erste Kühlstrecke
- 26, 226: Spiegel
- 27, 127, 227: erstes Kühlrohr
- 28, 128, 228: Motor
- 29: zweite Kühlstrecke
- 30: Hohlleiter
- 31: zweites Kühlrohr
- 32, 132, 232: Transceiver
- 33: erste Messvorrichtung
- 34, 134, 234: Strahlung
- 35: erster Messbereich
- 36: Innenfläche des Strangs
- 37: zweite Messvorrichtung
- 38: Außenfläche des Strangs
- 39: zweiter Messbereich
- 40: Innenfläche der Kalibrierhülse
- 41,43: Transceiver
- 42, 142, 242: Leitung
- 45: Auswerte- und Regeleinrichtung
- 146, 246: Pfeil
- 148: Rotationsmittelpunkt
- 150: Kreisbahn des Transceivers
- 152: Gehäuse des Messkopfes
- 248: Versorgungsleitung
- 250: Gehäuse

## Patentansprüche

1. Verfahren zum Vermessen eines aus einer Extrusionsvorrichtung (10, 110, 210) austretenden, in Längsrichtung geförderten rohrförmigen Strangs (16, 116, 216), umfassend die Schritte:
• in einem ersten Messbereich (35) wird Terahertzstrahlung von mindestens einer ersten Strahlungsquelle von innen auf die Innenfläche (36) des rohrförmigen Strangs (16, 116, 216) geleitet, wobei durch den rohrförmigen Strang (16, 116, 216) reflektierte Terahertzstrahlung von mindestens einem ersten Strahlungsempfänger empfangen wird, und wobei aus der empfangenen Terahertzstrahlung mindestens ein geometrischer Parameter des rohrförmigen Strangs (16, 116, 216) in dem ersten Messbereich (35) ermittelt wird,
• **dadurch gekennzeichnet, dass** in einem zweiten Messbereich (39), der in Förderrichtung des Strangs (16, 116, 216) stromab des ersten Messbereichs (35) liegt, wird Terahertzstrahlung von mindestens einer zweiten Strahlungsquelle von außen auf die Außenfläche (38) des rohrförmigen Strangs (16, 116, 216) geleitet, wobei durch den rohrförmigen Strang (16, 116, 216) reflektierte Terahertzstrahlung von mindestens einem zweiten Strahlungsempfänger empfangen wird, und wobei aus der empfangenen Terahertzstrahlung mindestens ein geometrischer Parameter des rohrförmigen Strangs (16, 116, 216) in dem zweiten Messbereich (39) ermittelt wird,
• dass eine Veränderung mindestens eines geometrischen Parameters des rohrförmigen Strangs (16, 116, 216) zwischen dem ersten Messbereich (35) und dem zweiten Messbereich (39) ermittelt wird, und
• dass mindestens eine Einstellanweisung für die Extrusionsvorrichtung (10, 110, 210) auf Grundlage einer ermittelten Veränderung des mindestens einen geometrischen Parameters ermittelt wird,
• dass aus der durch den mindestens einen zweiten Strahlungsempfänger in dem zweiten Messbereich (39) empfangenen Terahertzstrahlung der Brechungsindex des rohrförmigen Strangs (16, 116, 216) bestimmt wird, und
• dass der in dem zweiten Messbereich (39) bestimmte Brechungsindex zur Ermittlung des mindestens einen geometrischen Parameters in dem ersten Messbereich (35) verwendet wird.

2. Verfahren nach Anspruch 1, **dadurch gekennzeichnet, dass** die Extrusionsvorrichtung (10, 110, 210) auf Grundlage der mindestens einen ermittelten Einstellanweisung gesteuert und/oder geregelt wird.

3. Verfahren nach einem der vorhergehenden Ansprüche, **dadurch gekennzeichnet, dass** sich der rohrförmige Strang (10, 110, 210) im ersten Messbereich (35) in einer der Extrusionsvorrichtung (10, 110, 210) nachfolgenden Kalibriervorrichtung (22, 122, 222), insbesondere einer Kalibrierhülse (24, 124, 224), befindet und/oder dass sich der zweite Messbereich (39) stromab einer von dem rohrförmigen Strang (16, 116, 216) durchlaufenen Kühlstrecke (25, 125, 225) befindet.

4. Verfahren nach einem der vorhergehenden Ansprüche, **dadurch gekennzeichnet, dass** sich die Wellenlänge der von der mindestens einen ersten Strahlungsquelle und der von der mindestens einen zweiten Strahlungsquelle ausgesandten Terahertzstrahlung höchstens um den Faktor 5, vorzugsweise höchstens um den Faktor 3, weiter vorzugsweise höchstens um den Faktor 1,5, noch weiter vorzugsweise nicht unterscheidet.

5. Verfahren nach einem der vorhergehenden Ansprüche, **dadurch gekennzeichnet, dass** die Terahertzstrahlung durch die mindestens eine erste Strahlungsquelle auf mehrere über den Innenumfang des rohrförmigen Strangs (16, 116, 216) verteilte Messorte auf der Innenfläche (36) des rohrförmigen Strangs (16, 116, 216) geleitet wird und/oder dass die Terahertzstrahlung durch die mindestens eine zweite Strahlungsquelle auf mehrere über den Außenumfang des rohrförmigen Strangs (16, 116, 216) verteilte Messorte auf der Außenfläche (38) des rohrförmigen Strangs (16, 116, 216) geleitet wird, wobei vorzugsweise als mindestens ein geometrischer Parameter die Wanddicke des rohrförmigen Strangs (16, 116, 216) an mehreren über den Umfang des rohrförmigen Strangs (16, 116, 216) verteilten Messorten in dem ersten Messbereich (35) und an mehreren über den Umfang des rohrförmigen Strangs (16, 116, 216) verteilten Messorten in dem zweiten Messbereich (39) gemessen wird.

6. Verfahren nach einem der vorhergehenden Ansprüche, **dadurch gekennzeichnet, dass** in einem ersten Steuer- und/oder Regelvorgang eine Steuerung und/oder Regelung der Extrusionsvorrichtung (10, 110, 210) auf Grundlage der Messung in dem zweiten Messbereich (39) derart erfolgt, dass die Messwerte in dem zweiten Messbereich (39) vorgegebenen Sollmesswerten entsprechen, dass bei Erreichen der Sollmesswerte in dem zweiten Messbereich (39) die zugeordneten Messwerte in dem ersten Messbereich (35) ermittelt werden, und dass in einem nachfolgenden Steuer- und/oder Regelvorgang eine Steuerung und/oder Regelung der Extrusionsvorrichtung (10, 110, 210) auf Grundlage der Messung in dem ersten Messbereich (35) derart erfolgt, dass die Messwerte in dem ersten Messbereich (35) den ermittelten zugeordneten Messwerten entsprechen.

7. Verfahren nach einem der vorhergehenden Ansprüche, **dadurch gekennzeichnet, dass** auf einer der mindestens einen zweiten Strahlungsquelle und/oder dem mindestens einen zweiten Strahlungsempfänger gegenüberliegenden Seite des rohrförmigen Strangs (16, 116, 216) mindestens ein Strahlungsreflektor vorgesehen ist, der von der mindestens einen zweiten Strahlungsquelle ausgesandte Terahertzstrahlung zu dem mindestens einen zweiten Strahlungsempfänger reflektiert.

8. Verfahren nach einem der vorhergehenden Ansprüche, **dadurch gekennzeichnet, dass** die Terahertzstrahlung durch die mindestens eine erste Strahlungsquelle senkrecht zur Längsachse des rohrförmigen Strangs (16, 116, 216) auf die Innenfläche (36) des rohrförmigen Strangs (16, 116, 216) geleitet wird und/oder dass die Terahertzstrahlung durch die mindestens eine zweite Strahlungsquelle senkrecht zur Längsachse des rohrförmigen Strangs (16, 116, 216) auf die Außenfläche (38) des rohrförmigen Strangs (16, 116, 216) geleitet wird.

9. Vorrichtung zum Vermessen eines aus einer Extrusionsvorrichtung (10, 110, 210) austretenden, in Längsrichtung geförderten rohrförmigen Strangs (16, 116, 216), umfassend:
• mindestens eine erste Strahlungsquelle zum Aussenden von Terahertzstrahlung in einem ersten Messbereich (35) von innen auf die Innenfläche (36) des rohrförmigen Strangs (16, 116, 216), mindestens einen ersten Strahlungsempfänger zum Empfangen der durch den rohrförmigen Strang (16, 116, 216) in dem zweiten Messbereich (39) reflektierten Terahertzstrahlung, und eine erste Auswerteeinrichtung (45) zum Ermitteln mindestens eines geometrischen Parameters des rohrförmigen Strangs (16, 116, 216) in dem ersten Messbereich (35) aus der empfangenen Terahertzstrahlung,
• **gekennzeichnet durch** mindestens eine zweite Strahlungsquelle zum Aussenden von Terahertzstrahlung in einem in Förderrichtung des Strangs (16, 116, 216) stromab des ersten Messbereichs (35) liegenden zweiten Messbereich (39) von außen auf die Außenfläche (38) des rohrförmigen Strangs (16, 116, 216), mindestens einen zweiten Strahlungsempfänger zum Empfangen der durch den rohrförmigen Strang (16, 116, 216) in dem zweiten Messbereich (39) reflektierten Terahertzstrahlung, und eine zweite Auswerteeinrichtung (45) zum Ermitteln mindestens eines geometrischen Parameters des rohrförmigen Strangs (16, 116, 216) in dem zweiten Messbereich (39) aus der empfangenen Terahertzstrahlung,
• eine dritte Auswerteeinrichtung (45) zum Ermitteln einer Veränderung mindestens eines geometrischen Parameters des rohrförmigen Strangs (16, 116, 216) zwischen dem ersten Messbereich (35) und dem zweiten Messbereich (39), und zum Ermitteln mindestens einer Einstellanweisung für die Extrusionsvorrichtung (10, 110, 210) auf Grundlage einer ermittelten Veränderung des mindestens einen geometrischen Parameters
• wobei die erste, zweite und/oder dritte Auswerteeinrichtung (45) und/oder die Steuer- und Regeleinrichtung (45) dazu ausgebildet ist, aus der durch den mindestens einen zweiten Strahlungsempfänger in dem zweiten Messbereich (39) empfangenen Terahertzstrahlung der Brechungsindex des rohrförmigen Strangs (16, 116, 216) zu bestimmen, und
• wobei die erste Auswerteeinrichtung (45) dazu ausgebildet ist, den in dem zweiten Messbereich (39) bestimmten Brechungsindex zur Ermittlung des mindestens einen geometrischen Parameters in dem ersten Messbereich (35) zu verwenden.

10. Vorrichtung nach Anspruch 9, **dadurch gekennzeichnet, dass** eine Steuer- und/oder Regeleinrichtung (45) vorgesehen ist zum Steuern und/oder Regeln der Extrusionsvorrichtung (10, 110, 210) auf Grundlage der mindestens einen ermittelten Einstellanweisung.

11. Vorrichtung nach einem der Ansprüche 9 oder 10, **dadurch gekennzeichnet, dass** weiterhin eine der Extrusionsvorrichtung (10, 110, 210) nachfolgende Kalibriervorrichtung (22, 122, 222), insbesondere einer Kalibrierhülse (24, 124, 224), im ersten Messbereich (35) vorgesehen ist und/oder dass weiterhin eine von dem rohrförmigen Strang (16, 116, 216) durchlaufene Kühlstrecke (25, 125, 225) vorgesehen ist, wobei sich der zweite Messbereich (39) stromab der Kühlstrecke (25, 125, 225) befindet.

12. Vorrichtung nach einem der Ansprüche 9 bis 11, **dadurch gekennzeichnet, dass** sich die Wellenlänge der von der mindestens einen ersten Strahlungsquelle und der von der mindestens einen zweiten Strahlungsquelle ausgesandten Terahertzstrahlung höchstens um den Faktor 5, vorzugsweise höchstens um den Faktor 3, weiter vorzugsweise höchstens um den Faktor 1,5, noch weiter vorzugsweise nicht unterscheidet.

13. Vorrichtung nach einem der Ansprüche 9 bis 12, **dadurch gekennzeichnet, dass** die Steuer und/oder Regeleinrichtung (45) dazu ausgebildet ist, in einem ersten Steuer- und/oder Regelvorgang eine Steuerung und/oder Regelung der Extrusionsvorrichtung (10, 110, 210) auf Grundlage der Messung in dem zweiten Messbereich (39) derart durchzuführen, dass die Messwerte in dem zweiten Messbereich (39) vorgegebenen Sollmesswerten entsprechen, weiterhin bei Erreichen der Sollmesswerte in dem zweiten Messbereich (39) die zugeordneten Messwerte in dem ersten Messbereich (35) zu ermitteln, und weiterhin in einem nachfolgenden Steuer- und/oder Regelvorgang eine Steuerung und/oder Regelung der Extrusionsvorrichtung (10, 110, 210) auf Grundlage der Messung in dem ersten Messbereich (35) derart durchzuführen, dass die Messwerte in dem ersten Messbereich (35) den ermittelten zugeordneten Messwerten entsprechen.

14. Vorrichtung nach einem der vorhergehenden Ansprüche, **dadurch gekennzeichnet, dass** auf einer der mindestens einen zweiten Strahlungsquelle und/oder dem mindestens einen zweiten Strahlungsempfänger gegenüberliegenden Seite des rohrförmigen Strangs (16, 116, 216) mindestens ein Strahlungsreflektor vorgesehen ist, der von der mindestens einen zweiten Strahlungsquelle ausgesandte Terahertzstrahlung zu dem mindestens einen zweiten Strahlungsempfänger reflektiert.

15. Vorrichtung nach einem der Ansprüche 9 bis 14, **dadurch gekennzeichnet, dass** die mindestens eine erste Strahlungsquelle und/oder der mindestens eine erste Strahlungsempfänger im Inneren des rohrförmigen Strangs (16, 116, 216) angeordnet ist oder dass die mindestens eine erste Strahlungsquelle und/oder der mindestens eine erste Strahlungsempfänger außerhalb des rohrförmigen Strangs (16, 116, 216) angeordnet ist, und dass von der mindestens einen ersten Strahlungsquelle ausgesandte Terahertzstrahlung über mindestens einen Strahlungsleiter in das Innere des rohrförmigen Strangs (16, 116, 216) geleitet wird, und dass die von dem rohrförmigen Strang (16, 116, 216) reflektierte Terahertzstrahlung über mindestens einen Strahlungsleiter aus dem Inneren des rohrförmigen Strangs (16, 116, 216) zu dem mindestens einen ersten Strahlungsempfänger geleitet wird.

## Claims

1. A method for measuring a tubular strand (16, 116, 216) emerging from an extrusion device (10, 110, 210) and conveyed in a longitudinal direction, said method comprising the steps of:
• in a first measurement region (35), guiding terahertz radiation from at least one first radiation source from the inside onto the inner surface (36) of the tubular strand (16, 116, 216), the terahertz radiation reflected by the tubular strand (16, 116, 216) being received by at least one first radiation receiver, and at least one geometric parameter of the tubular strand (16, 116, 216) being determined from the received terahertz radiation in the first measurement region (35),
• **characterized in that** in a second measurement region (39) located downstream of the first measurement region (35) in the conveying direction of the strand (16, 116, 216), guiding terahertz radiation from at least one second radiation source from the outside onto the outer surface (38) of the tubular strand (16, 116, 216), terahertz radiation reflected by the tubular strand (16, 116, 216) being received by at least one second radiation receiver, and at least one geometric parameter of the tubular strand (16, 116, 216) being determined from the received terahertz radiation in the second measurement region (39),
• a change in at least one geometric parameter of the tubular strand (16, 116, 216) between the first measurement region (35) and the second measurement region (39) is determined, and
• at least one adjustment instruction for the extrusion device (10, 110, 210) based on a determined change in the at least one geometric parameter is determined,
• the refractive index of the tubular strand (16, 116, 216) is established from the terahertz radiation received by the at least one second radiation receiver in the second measurement region (39), and
• the refractive index established in the second measurement region (39) is used to determine the at least one geometric parameter in the first measurement region (35).

2. The method according to Claim 1, **characterized in that** the extrusion device (10, 110, 210) is controlled and/or regulated based on the at least one determined adjustment instruction.

3. The method according to any one of the preceding claims, **characterized in that** the tubular strand (10, 110, 210) is located in the first measurement region (35) in a calibration device (22, 122, 222) following the extrusion device (10, 110, 210), in particular a calibration sleeve (24, 124, 224), and/or the second measurement region (39) is located downstream of a cooling section (25, 125, 225) passed through by the tubular strand (16, 116, 216).

4. The method according to any one of the preceding claims, **characterized in that** the wavelength of the terahertz radiation emitted by the at least one first radiation source and the wavelength of the terahertz radiation emitted by the at least one second radiation source differ at most by a factor of 5, preferably at most by a factor of 3, more preferably at most by a factor of 1.5, even more preferably do not differ.

5. The method according to any one of the preceding claims, **characterized in that** the terahertz radiation is guided by the at least one first radiation source to several measuring sites distributed over the inner circumference of the tubular strand (16, 116, 216) on the inner surface (36) of the tubular strand (16, 116, 216) and/or the terahertz radiation is guided by the at least one second radiation source to several measuring sites distributed over the outer circumference of the tubular strand (16, 116, 216) on the outer surface (38) of the tubular strand (16, 116, 216), the wall thickness of the tubular strand (16, 116, 216) is preferably measured at several measuring sites distributed over the circumference of the tubular strand (16, 116, 216) in the first measurement region (35) and at several measuring sites distributed over the circumference of the tubular strand (16, 116, 216) in the second measurement region (39) as at least one geometric parameter.

6. The method according to any one of the preceding claims, **characterized in that** in a first control and/or regulating operation, a control and/or regulation of the extrusion device (10, 110, 210) is/are carried out based on the measurement in the second measurement region (39) in such a way that the measured values in the second measurement region (39) correspond to specified nominal measured values, that on reaching the nominal measured values in the second measurement region (39) the assigned measured values in the first measurement region (35) are determined, and that in a subsequent control and/or regulating operation a control and/or regulation of the extrusion device (10, 110, 210) is/are carried out based on the measurement in the first measurement region (35) in such a way that the measured values in the first measurement region (35) correspond to the determined assigned measured values.

7. The method according to any one of the preceding claims, **characterized in that** on a side of the tubular strand (16, 116, 216) opposite the at least one second radiation source and/or opposite the at least one second radiation receiver there is provided at least one radiation reflector which reflects terahertz radiation emitted by the at least one second radiation source to the at least one second radiation receiver.

8. The method according to any one of the preceding claims, **characterized in that** the terahertz radiation is guided by the at least one first radiation source perpendicular to the longitudinal axis of the tubular strand (16, 116, 216) onto the inner surface (36) of the tubular strand (16, 116, 216) and/or the terahertz radiation is guided by the at least one second radiation source perpendicular to the longitudinal axis of the tubular strand (16, 116, 216) onto the outer surface (38) of the tubular strand (16, 116, 216).

9. A device for measuring a tubular strand (16, 116, 216) emerging from an extrusion device (10, 110, 210) and conveyed in a longitudinal direction, comprising:
• at least one first radiation source for emitting terahertz radiation in a first measurement region (35) from the inside onto the inner surface (36) of the tubular strand (16, 116, 216), at least one first radiation receiver for receiving the terahertz radiation reflected by the tubular strand (16, 116, 216) in the second measurement region (39), and a first evaluation apparatus (45) for determining at least one geometric parameter of the tubular strand (16, 116, 216) in the first measurement region (35) from the received terahertz radiation,
• **characterized by** at least one second radiation source for emitting terahertz radiation in a second measurement region (39) located downstream of the first measurement region (35) in the conveying direction of the strand (16, 116, 216) from the outside onto the outer surface (38) of the tubular strand (16, 116, 216), at least one second radiation receiver for receiving the terahertz radiation reflected by the tubular strand (16, 116, 216) in the second measurement region (39), and a second evaluation apparatus (45) for determining at least one geometric parameter of the tubular strand (16, 116, 216) in the second measurement region (39) from the received terahertz radiation,
• a third evaluation apparatus (45) for determining a change in at least one geometric parameter of the tubular strand (16, 116, 216) between the first measurement region (35) and the second measurement region (39), and for determining at least one adjustment instruction for the extrusion device (10, 110, 210) based on a determined change in the at least one geometric parameter,
• the first, second and/or third evaluation apparatus (45) and/or the control and regulating apparatus (45) being configured to establish the refractive index of the tubular strand (16, 116, 216) from the terahertz radiation received by the at least one second radiation receiver in the second measurement region (39), and
• the first evaluation apparatus (45) being configured to use the refractive index established in the second measurement region (39) to determine the at least one geometric parameter in the first measurement region (35).

10. The device according to Claim 9, **characterized in that** a control and/or regulating apparatus (45) is provided for controlling and/or regulating the extrusion device (10, 110, 210) based on the at least one determined adjustment instruction.

11. The device according to any one of Claims 9 or 10, **characterized in that** a calibration device (22, 122, 222) following the extrusion device (10, 110, 210), in particular a calibration sleeve (24, 124, 224), is furthermore provided in the first measurement region (35) and/or a cooling section (25, 125, 225) which is passed through by the tubular strand (16, 116, 216) is furthermore provided, the second measurement region (39) being located downstream of the cooling section (25, 125, 225).

12. The device according to any one of Claims 9 to 11, **characterized in that** the wavelength of the terahertz radiation emitted by the at least one first radiation source and the wavelength of the terahertz radiation emitted by the at least one second radiation source differ at most by a factor of 5, preferably at most by a factor of 3, more preferably at most by a factor of 1.5, even more preferably do not differ.

13. The device according to any one of Claims 9 to 12, **characterized in that** the control and/or regulating apparatus (45) is configured to perform a control and/or regulation of the extrusion device (10, 110, 210) based on the measurement in the second measurement region (39) in a first control and/or regulating operation in such a way that the measured values in the second measurement region (39) correspond to specified nominal measured values, furthermore on reaching the nominal measured values in the second measurement region (39), to determine the assigned measured values in the first measurement region (35), and furthermore to perform a control and/or regulation of the extrusion device (10, 110, 210) based on the measurement in the first measurement region (35) in a subsequent control and/or regulating operation in such a way that the measured values in the first measurement region (35) correspond to the determined assigned measured values.

14. The device according to any one of the preceding claims, **characterized in that** on a side of the tubular strand (16, 116, 216) opposite the at least one second radiation source and/or opposite the at least one second radiation receiver there is provided at least one radiation reflector which reflects terahertz radiation emitted by the at least one second radiation source to the at least one second radiation receiver.

15. The device according to any one of Claims 9 to 14, **characterized in that** the at least one first radiation source and/or the at least one first radiation receiver is/are arranged in the interior of the tubular strand (16, 116, 216), or the at least one first radiation source and/or the at least one first radiation receiver is/are arranged outside of the tubular strand (16, 116, 216), and terahertz radiation emitted by the at least one first radiation source is guided via at least one radiation conductor into the interior of the tubular strand (16, 116, 216), and the terahertz radiation reflected by the tubular strand (16, 116, 216) is guided via at least one radiation conductor out of the interior of the tubular strand (16, 116, 216) to the at least one first radiation receiver.

## Revendications

1. Procédé de mesure d'une barre tubulaire (16, 116, 216) sortant d'un dispositif d'extrusion (10, 110, 210), transportée dans le sens longitudinal, comportant les étapes suivantes :
• dans une première plage de mesure (35), un rayonnement térahertz provenant d'au moins une première source de rayonnement est guidé depuis l'intérieur vers la surface intérieure (36) de la barre tubulaire (16, 116, 216), dans lequel le rayonnement térahertz réfléchi par la barre tubulaire (16, 116, 216) est reçu par au moins un premier récepteur de rayonnement, et dans lequel au moins un paramètre géométrique de la barre tubulaire (16, 116, 216) est déterminé dans la première plage de mesure (35) à partir du rayonnement térahertz reçu,
• **caractérisé en ce que** dans une deuxième plage de mesure (39) située en aval de la première plage de mesure (35) dans la direction de transport de la barre (16, 116, 216), un rayonnement térahertz provenant d'au moins une deuxième source de rayonnement est guidé depuis l'extérieur vers la surface extérieure (38) de la barre tubulaire (16, 116, 216), dans lequel le rayonnement térahertz réfléchi par la barre tubulaire (16, 116, 216) est reçu par au moins un deuxième récepteur de rayonnement, et dans lequel au moins un paramètre géométrique de la barre tubulaire (16, 116, 216) est déterminé dans la deuxième plage de mesure (39) à partir du rayonnement térahertz reçu,
• **en ce qu'**une modification d'au moins un paramètre géométrique de la barre tubulaire (16, 116, 216) est déterminée entre la première plage de mesure (35) et la deuxième plage de mesure (39), et
• **en ce qu'**au moins une consigne de réglage pour le dispositif d'extrusion (10, 110, 210) est déterminée sur la base d'une modification déterminée de l'au moins un paramètre géométrique,
• **en ce que** l'indice de réfraction de la barre tubulaire (16, 116, 216) est défini à partir du rayonnement térahertz reçu par l'au moins un deuxième récepteur de rayonnement dans la deuxième plage de mesure (39), et
• **en ce que** l'indice de réfraction défini dans la deuxième plage de mesure (39) est utilisé pour la détermination de l'au moins un paramètre géométrique dans la première plage de mesure (35).

2. Procédé selon la revendication 1, **caractérisé en ce que** le dispositif d'extrusion (10, 110, 210) est commandé et/ou réglé sur la base de l'au moins une consigne de réglage déterminée.

3. Procédé selon l'une des revendications précédentes, **caractérisé en ce que** dans la première plage de mesure (35), la barre tubulaire (16, 116, 216) se situe dans un dispositif d'étalonnage (22, 122, 222) consécutif au dispositif d'extrusion (10, 110, 210), en particulier une douille d'étalonnage (24, 124, 224) et/ou **en ce que** la deuxième plage de mesure (39) se situe en aval d'un trajet de refroidissement (25, 125, 225) parcouru par la barre tubulaire (16, 116, 216).

4. Procédé selon l'une des revendications précédentes, **caractérisé en ce que** la longueur d'onde du rayonnement térahertz émis par l'au moins une première source de rayonnement et de celui émis par l'au moins une deuxième source de rayonnement se distingue au maximum selon le facteur 5, de préférence au maximum selon le facteur 3, plus préférentiellement au maximum selon le facteur 1,5, encore plus préférentiellement, ne se distingue pas.

5. Procédé selon l'une des revendications précédentes, **caractérisé en ce que** le rayonnement térahertz est guidé par l'au moins une première source de rayonnement vers plusieurs points de mesure répartis sur la circonférence intérieure de la barre tubulaire (16, 116, 216) sur la surface intérieure (36) de la barre tubulaire (16, 116, 216) et/ou **en ce que** le rayonnement térahertz est guidé par l'au moins une deuxième source de rayonnement vers plusieurs points de mesure répartis sur la circonférence extérieure de la barre tubulaire (16, 116, 216) sur la surface extérieure (38) de la barre tubulaire (16, 116, 216), dans lequel, en tant qu'au moins un paramètre géométrique, l'épaisseur de paroi de la barre tubulaire (16, 116, 216) est mesurée de préférence en plusieurs points de mesure répartis sur la circonférence de la barre tubulaire (16, 116, 216) dans la première plage de mesure (35) et en plusieurs points de mesure répartis sur la circonférence de la barre tubulaire (16, 116, 216) dans la deuxième plage de mesure (39).

6. Procédé selon l'une des revendications précédentes, **caractérisé en ce que** dans une première opération de commande et/ou de réglage, une commande et/ou un réglage du dispositif d'extrusion (10, 110, 210) est/sont exécuté(es) de telle façon sur la base de la mesure dans la deuxième plage de mesure (39), que les valeurs de mesure dans la deuxième plage de mesure (39) correspondent à des valeurs de mesure théoriques prédéfinies, **en ce que** lors de l'atteinte des valeurs de mesure théoriques dans la deuxième plage de mesure (39), les valeurs de mesure associées dans la première plage de mesure (35) sont déterminées, et **en ce que** dans une opération de commande et/ou de réglage consécutive, une commande et/ou un réglage du dispositif d'extrusion (10, 110, 210) est/sont exécuté(es) de telle façon sur la base de la mesure dans la première plage de mesure (35), que les valeurs de mesure dans la première plage de mesure (35) correspondent aux valeurs de mesure associées déterminées.

7. Procédé selon l'une des revendications précédentes, **caractérisé en ce que** sur un côté de la barre tubulaire (16, 116, 216) opposé à l'au moins une deuxième source de rayonnement et/ou à l'au moins un deuxième récepteur de rayonnement, il est prévu au moins un réflecteur de rayonnement, lequel réfléchit un rayonnement térahertz émis par l'au moins une deuxième source de rayonnement vers l'au moins un deuxième récepteur de rayonnement.

8. Procédé selon l'une des revendications précédentes, **caractérisé en ce que** le rayonnement térahertz est guidé par l'au moins une première source de rayonnement perpendiculairement à l'axe longitudinal de la barre tubulaire (16, 116, 216) vers la surface intérieure (36) de la barre tubulaire (16, 116, 216) et/ou **en ce que** le rayonnement térahertz est guidé par l'au moins une deuxième source de rayonnement perpendiculairement à l'axe longitudinal de la barre tubulaire (16, 116, 216) vers la surface extérieure (38) de la barre tubulaire (16, 116, 216).

9. Dispositif de mesure d'une barre tubulaire (16, 116, 216) sortant d'un dispositif d'extrusion (10, 110, 210), transportée dans le sens longitudinal, comportant :
• au moins une première source de rayonnement destinée à émettre un rayonnement térahertz dans une première plage de mesure (35) depuis l'intérieur vers la surface intérieure (36) de la barre tubulaire (16, 116, 216), au moins un premier récepteur de rayonnement destiné à recevoir le rayonnement térahertz réfléchi par la barre tubulaire (16, 116, 216) dans la deuxième plage de mesure (39), et un premier système d'évaluation (45) destiné à déterminer au moins un paramètre géométrique de la barre tubulaire (16, 116, 216) dans la première plage de mesure (35) à partir du rayonnement térahertz reçu,
• **caractérisé par** au moins une deuxième source de rayonnement destinée à émettre un rayonnement térahertz dans une deuxième plage de mesure (39) située en aval de la première plage de mesure (35) dans la direction de transport de la barre (16, 116, 216) depuis l'extérieur vers la surface extérieure (38) de la barre tubulaire (16, 116, 216), au moins un deuxième récepteur de rayonnement destiné à recevoir le rayonnement térahertz réfléchi par la barre tubulaire (16, 116, 216) dans la deuxième plage de mesure (39), et un deuxième système d'évaluation (45) destiné à déterminer au moins un paramètre géométrique de la barre tubulaire (16, 116, 216) dans la deuxième plage de mesure (39) à partir du rayonnement térahertz reçu,
• un troisième système d'évaluation (45) destiné à déterminer une modification d'au moins un paramètre géométrique de la barre tubulaire (16, 116, 216) entre la première plage de mesure (35) et la deuxième plage de mesure (39), et à déterminer au moins une consigne de réglage pour le dispositif d'extrusion (10, 110, 210) sur la base d'une modification déterminée de l'au moins un paramètre géométrique,
• dans lequel le premier, le deuxième et/ou le troisième système d'évaluation (45) et/ou le système de commande et de réglage (45) est/sont conçu(s) pour déterminer l'indice de réfraction de la barre tubulaire (16, 116, 216) à partir du rayonnement térahertz reçu par l'au moins un deuxième récepteur de rayonnement dans la deuxième plage de mesure (39), et
• dans lequel le premier système d'évaluation (45) est conçu pour utiliser l'indice de réfraction défini dans la deuxième plage de mesure (39) pour la détermination de l'au moins un paramètre géométrique dans la première plage de mesure (35).

10. Dispositif selon la revendication 9, **caractérisé en ce qu'**il est prévu un système de commande et/ou de réglage (45) pour la commande et/ou le réglage du dispositif d'extrusion (10, 110, 210) sur la base de l'au moins une consigne de réglage déterminée.

11. Dispositif selon l'une des revendications 9 ou 10, **caractérisé en ce que** dans la première plage de mesure (35), il est en outre prévu un dispositif d'étalonnage (22, 122, 222) consécutif au dispositif d'extrusion (10, 110, 210), en particulier une douille d'étalonnage (24, 124, 224) et/ou **en ce qu'**il est en outre prévu un trajet de refroidissement (25, 125, 225) parcouru par la barre tubulaire (16, 116, 216), dans lequel la deuxième plage de mesure (39) se situe en aval du trajet de refroidissement (25, 125, 225).

12. Dispositif selon l'une des revendications 9 à 11, **caractérisé en ce que** la longueur d'onde du rayonnement térahertz émis par l'au moins une première source de rayonnement et de celui émis par l'au moins une deuxième source de rayonnement se distinguent au maximum selon le facteur 5, de préférence au maximum selon le facteur 3, plus préférentiellement au maximum selon le facteur 1,5, ou, encore plus préférentiellement, ne se distinguent pas l'un de l'autre.

13. Dispositif selon l'une des revendications 9 à 12, **caractérisé en ce que** le système de commande et/ou de réglage (45) est conçu pour exécuter une commande et/ou un réglage du dispositif d'extrusion (10, 110, 210) dans une première opération de commande et/ou de réglage de telle façon sur la base de la mesure dans la deuxième plage de mesure (39), que les valeurs de mesure dans la deuxième plage de mesure (39) correspondent à des valeurs de mesure théoriques prédéfinies, pour déterminer les valeurs de mesure associées dans la première plage de mesure (35) lors de l'atteinte des valeurs de mesure théoriques dans la deuxième plage de mesure (39), et pour exécuter en outre une commande et/ou un réglage du dispositif d'extrusion (10, 110, 210) dans une opération de commande et/ou de réglage consécutive de telle façon sur la base de la mesure dans la première plage de mesure (35), que les valeurs de mesure dans la première plage de mesure (35) correspondent aux valeurs de mesure associées déterminées.

14. Dispositif selon l'une des revendications précédentes, **caractérisé en ce que** sur un côté de la barre tubulaire (16, 116, 216) opposé à l'au moins une deuxième source de rayonnement et/ou à l'au moins un deuxième récepteur de rayonnement, il est prévu au moins un réflecteur de rayonnement, lequel réfléchit un rayonnement térahertz émis par l'au moins une deuxième source de rayonnement vers l'au moins un deuxième récepteur de rayonnement.

15. Dispositif selon l'une des revendications 9 à 14, **caractérisé en ce que** l'au moins une première source de rayonnement et/ou l'au moins un premier récepteur de rayonnement est/sont disposé(es) à l'intérieur de la barre tubulaire (16, 116, 216) ou **en ce que** l'au moins une première source de rayonnement et/ou l'au moins un premier récepteur de rayonnement est/sont disposé(es) à l'extérieur de la barre tubulaire (16, 116, 216), et **en ce que** le rayonnement térahertz émis par l'au moins une première source de rayonnement est guidé par le biais d'au moins un guide de rayonnement vers l'intérieur de la barre tubulaire (16, 116, 216), et **en ce que** le rayonnement térahertz réfléchi par la barre tubulaire (16, 116, 216) est guidé par le biais d'au moins un guide de rayonnement depuis l'intérieur de la barre tubulaire (16, 116, 216) vers l'au moins un premier récepteur de rayonnement.
